(19) Europäisches Patentamt
European Patent Office
Office européen des brevets

(11) Veröffentlichungsnummer: **0 523 445 B1**

# (12) EUROPÄISCHE PATENTSCHRIFT

(45) Veröffentlichungstag der Patentschrift: **15.11.95**

(51) Int. Cl.6: **C08L 77/00**, C08L 77/08, //(C08L77/00,77:08),(C08L77/08, 77:00)

(21) Anmeldenummer: **92111091.2**

(22) Anmeldetag: **01.07.92**

## (54) Thermoplastische Formmassen aus semikristallinem und amorphem Polyamid, deren Verwendung und Verfahren zu ihrer Herstellung.

(30) Priorität: **04.07.91 DE 4122211**

(43) Veröffentlichungstag der Anmeldung:
**20.01.93 Patentblatt 93/03**

(45) Bekanntmachung des Hinweises auf die Patenterteilung:
**15.11.95 Patentblatt 95/46**

(84) Benannte Vertragsstaaten:
**CH DE FR GB IT LI NL**

(56) Entgegenhaltungen:
**EP-A- 0 073 036**
**EP-A- 0 400 428**
**EP-A- 0 408 474**

(73) Patentinhaber: **EMS-INVENTA AG**
**Selnaustrasse 16**
**CH-8001 Zürich (CH)**

(72) Erfinder: **Schmid, Eduard**
**Valbeuna**
**CH-7402 Bonaduz (CH)**
Erfinder: **Thullen, Helmuth**
**Via Caschners 27**
**CH-7402 Bonaduz (CH)**

(74) Vertreter: **Müller-Boré & Partner Patentanwälte**
**Grafinger Strasse 2**
**D-81671 München (DE)**

EP 0 523 445 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen aus einem amorphen Copolyamid, welches dimerisierte Fettsäure als Monomerbaustein enthält, und einem semikristallinen Polyamid sowie gegebenenfalls einem Verträglichkeitsvermittler, wobei das semikristalline Polyamid a) bevorzugt die kontinuierliche Phase und das amorphe Copolyamid b) die disperse Phase bildet.

In der EP-PS 70 001 B2 wird ein thermoplastisches Formharz aus semikristallinem Polyamid und amorphem Copolyamid offenbart. In der US-PS 4 410 661 werden thermoplastische Polyamidblends aus semikristallinem Polyamid und amorphem Copolyamid aus Isophtalsäure, Terephthalsäure, Hexamethylendiamin und Bis-(p-aminocyclohexyl) methan sowie Schlagzähmodifikatoren vom Olefin- oder Kern-Mantel-Polymer-Typ beschrieben. Der Nachteil beider Formharze ist, dass aus ihnen hergestellte Gegenstände gegenüber heissem und insbesondere kochendem Wasser sehr empfindlich sind: Formteile aus einem Formharz mit einem semikristallinen Polyamidanteil von kleiner/gleich 40 Gew.-% verlieren dabei vollständig ihre Formstabilität und solche mit einem semikristallinem Polyamidanteil von grösser/gleich 40 Gew.-% erleiden eine wesentliche Reduktion ihrer Steifigkeit.

In der DE-PS 3 200 428 C2 sind glasfaserverstärkte Polyamidblends auf Basis von teilkristallinen Polyamiden mit einem Anteil an amorphen transparenten Polyamiden von kleiner/gleich 20 Gew.-% beschrieben. Auch diese Polyamidblends genügen im Temperaturbereich oberhalb 100 °C und in feuchter Atmosphäre erhöhten Anforderungen nicht.

In der EP-OS 325 030 A2 ist eine Polyamidmischung mit besonders niedriger Glasübergangstemperatur und verbesserten Sperreigenschaften aus einem speziellen statischen Copolyamid und einem alipathischen Homopolyamid beschrieben. Auch hier sind die mechanischen Eigenschaften bei Hitze- und Feuchtigkeitseinwirkung ungenügend.

In der DE-OS 3 817 279 A1 werden thermoplastische Formmassen aus einem amorphen teilaromatischen Copolyamid, einem semikristallinen Polyamid und bis zu 60 Gew.-% eines kautschukelastischen Polymeren beschrieben. Nachteil dieser Formmassen sind die schlechten mechanischen Eigenschaften bei der kombinierten Einwirkung von Hitze und Wasser.

Amorphe Copolyamide auf der Basis von dimerisierter Fettsäure, aromatischen Dicarbonsäuren und cycloaliphatischen Diaminen sind bekannt aus den DE-OS-40 23 967 und 968. Besonders weiche, elastomere und gleichzeitig amorphe Polyamide mit sehr tiefem $T_G$ aus Dimerfettsäure und aliphatischen Diaminen und anderen Monomeren sind in DE-OS 40 06 245 beschrieben.

Aufgabe der vorliegenden Erfindung war daher, thermoplastische Polyamidformmassen zu entwickeln, die sich zu Gegenständen verarbeiten lassen, die eine sehr gute Lösungsmittel- und Spannungsrisskorrosionsbeständigkeit sowie eine hohe Steifigkeit bei Temperaturen bis mindestens 100 °C aufweisen. Auch im konditionierten Zustand soll sich ihre Steifigkeit nicht oder nur wenig verringern. Diese Aufgabe wird gelöst durch die thermoplastischen Formmassen mit den kennzeichnenden Merkmalen der Ansprüche 1 oder 2, sowie durch das Verfahren mit den kennzeichnenden Merkmalen des Anspruches 25, die Verwendung gemäss Anspruch 27 und die Formteile gemäss Anspruch 28.

Die Erfindung beruht demgemäss auf der überraschenden Erkenntnis, dass gerade amorphe Copolyamide mit dimerisierter Fettsäure als Monomerbaustein in Kombination mit semikristallinen Polyamiden den Formmassen die gewünschten Eigenschaften verleihen, wobei die bei hohen Anteilen an amorphen Copolyamid zu beobachtende Delaminierungserscheinungen durch Zusatz eines Verträglichkeitsvermittlers verhindert werden.

Die erfingungsgemässen, thermoplastischen Formmassen bestehen aus:

a) 25-75 Gew.-Teilen eines semikristallinen Polyamids

b) 75-25 Gew.-Teilen eines amorphen Copolyamids aus

(i) 24-45 Mol-Teilen mindestens einer aromatischen Dicarbonsäure

(ii) 25-5 Mol-Teilen dimerisierter Fettsäure mit 36-45 C-Atomen

(iii) 50 Mol-Teilen mindestens eines cycloaliphatischen Diamins

wobei die Summe der Säuren (i) und (ii) und das Amin (iii) in äquimolaren Anteilen vorliegen

c) 0-30 Gew.-Teilen eines Verträglichkeitsvermittlers wobei sich die Anteile a), b) und c) auf 100 Gew.-Teile ergänzen.

und gegebenenfalls zusätzlich

d) den Stand der Technik entsprechenden üblichen Zusatzstoffen

Eine bevorzugte Zusammensetzung der Formmassen enthält amorphe Copolyamide aus 5-12 Mol-Teilen dimerisierter Fettsäure und 38-45 Mol-Teilen mindestens einer aromatischen Dicarbonsäure. Der Anteil des Verträglichkeitsvermittlers c) wird bevorzugt zwischen 1-30 Gew.-Teilen gewählt, besonders bevorzugt sind weniger als 10 Gew.-Teile. Die dem Stand der Technik entsprechenden 0-60 Gew.-Teile übliche Zusatzstoffe d) werden aus der Gruppe der Verarbeitungshilfsmittel und Stabilisatoren gewählt. Bevorzugt sind hierbei Schlagzähmodifikatoren, Flammschutzmittel, Füllstoffe und/oder Verstärkungsfasern.

Für die erfingungsgemässen Formmassen wird als semikristalline Komponente a) ein Homopolyamid aus $\omega$-Aminocarbonsäurenoder Lactamen mit 6-9 C-Atomen oder aus aliphatischen Diaminen mit 4-12 C-Atomen und linearen Dicarbonsäuren mit 6-12 C-Atomen eingesetzt, wobei das Verhältnis von $-CH_2-$ zu -CONH- Gruppen nicht grösser als 9:1 sein sollte. Bevorzugt sind PA 6, PA 6.6, PA 4.6, PA 6.9, PA 6.10 und PA 6.12. Ebenfalls geeignet sind semikristalline Copolyamide mit einem Schmelzpunkt, gemessen mittels DSC als Maximum der Schmelzbande, von mindestens 170° C. Bevorzugt sind hierbei Copolyamide auf Basis der Monomeren von PA 4.6, PA 6.6, PA 6.8, PA 6.9, PA 6.10, PA 6.12, PA 12.6 und PA 6. Besonders bevorzugt als semikristalline Blendkomponente sind solche Polyamide und Copolyamide, die eine gute Lösungsmittel- und Spannungsrisskorrosionsbeständigkeit sowie eine gute Verarbeitbarkeit im Spritzgussverfahren besitzen und einen Schmelzpunkt von mindestens 170°C haben.

Die erfindungsgemäss als zweite Komponente eingesetzten amorphen Copolyamide b) haben gegenüber den semikristallinen Polyamiden a) eine deutlich unterschiedliche Amidgruppenhäufigkeit. Sie bestehen aus:

(i) mindestens einer einkernigen oder mehrkernigen aromatischen Dicarbonsäure oder deren Gemischen. Bevorzugt sind Isophtalsäure, Terephthalsäure, Naphtalindicarbonsäure, 5-tert-butyl-Isophtalsäure,

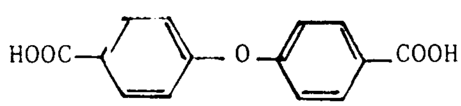

und

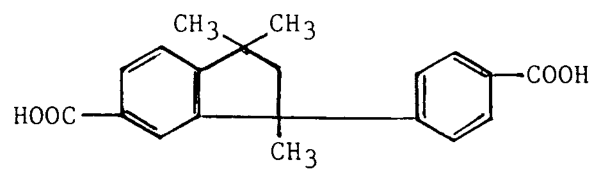

(ii) dimerisierter Fettsäure, die aus langkettigen, Fettsäuren mit 36 bis 35 C-Atomen, deren Dimeranteil bevorzugt mindestens 90 Gew.-%, insbesondere mindestens 97 Gew.-% beträgt, besteht.

(iii) mindestens einem cycloaliphatischen Diamin mit mindestens einem 6 C-Atome enthaltendem Ring, bevorzugt 1-Amino-3-aminomethyl-3, 5,5-trimethylcyclohexan, 1,3- und 1,4-Diaminocyclohexan, 1,3- und 1,4-Diaminomethylcyclohexan sowie Diaminen der Formel I oder einem Gemisch dieser Diamine.

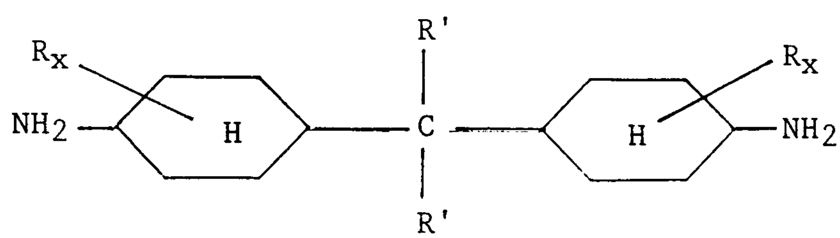

I

wobei R für einen Alkylrest mit 1-10 C-Atomen, bevorzugt für einen Methyl-, Ethyl- oder iso-Propylrest steht, R' Wasserstoff oder einen Alkylrest mit 1-6 C-Atomen, bevorzugt Methyl- oder Ethyl-, bedeutet und x 0 bis 4 ist.

Hierbei sind Amine der Formel II bis IV bevorzugt.

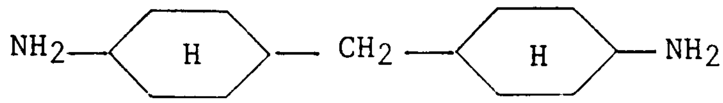
II

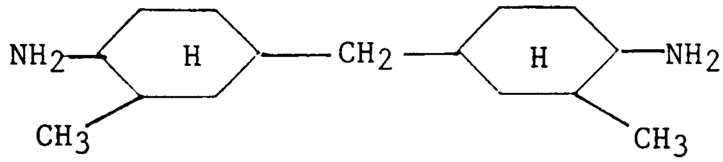
III

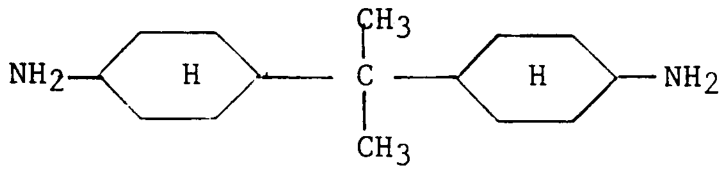
IV

Sowohl die Herstellung der als semikristalline Komponente a) eingesetzten semikristallinen Homo- und Copolyamide als auch die der als Komponente b) verwendeten amorphen Copolyamide ist bekannt.

Die verwendeten Copolyamide haben Molekulargewichte von mindestens 5'000, bevorzugt 10'000 bis 100'000.

Die Gewichtsanteile der beiden Formmassen-Hauptkomponenten a) und b) sowie die Herstellungsbedingungen für die Formmassen sind bevorzugt so zu wählen, dass das semikristalline Polyamid a) die kontinuierliche Phase und das amorphe Copolyamid b) die disperse Phase ausgebildet, wobei durch geeignete Wahl des Verträglichkeitsvermittlers und der Compoundierbedingungen das amorphe Copolyamid auch bei hohem Anteil in der Formmasse als disperse Phase erhalten bleibt, d.h. die einzelnen Glasübergangstemperaturen der beiden Formmassen-Hauptkomponenten a) und b) sind weiterhin messbar.

Die verträglichkeitsvermittelnde Wirkung der sogenannten reaktiven Polymeren beruht auf der Reaktion ihrer reaktiven Gruppen mit den Aminogruppen der beiden Polyamidkomponenten a) und b). Sie sind in maximal 30 Gew.-Teilen, bevorzugt aber unter 10 Gew.-Teilen und besonders bevorzugt unter 5 Gew.-Teilen in den erfindungsgemässen Formmassen enthalten. Solche Polymere eignen sich ganz besonders als Verträglichkeitsvermittler, sie werden nach dem Stand der Technik bevorzugt in hohen Mengenanteilen als Schlagzähmodifikatoren für Thermoplaste eingesetzt. Beispiele solcher reaktiver Polymere sind oligomere und/oder polymere schmelzbare Verbindungen, die zu den Endgruppen der Polyamide reaktive Gruppen besitzen, die bevorzugt Säureanhydrid-, Carbonsäure-, Diacrylsäure-, Epoxid-, Amino- oder mit Metallsalz neutralisierte Carbonsäure-Gruppen sind. Andere Beispiele für reaktive Polymere sind oligomere Polyolefine oder Copolyolefine mit einem niedrigen Glasumwandlungspunkt, bevorzugt Styrol-Maleinsäureanhydrid -Oligomere mit 4-10 Säureanhydridgruppen, sowie Kern-Mantel-Polymere, die reaktive Gruppen, bevorzugt Carbonsäure-, Diacrylsäure-, Maleinsäureanhydrid- und/oder Epoxid-Gruppen, besitzen.

Styrol-Maleinsäureanhydrid-Oligomere (z.B. SMA-Resins der firma Arco (USA), Typ 1000, 2000 oder 3000) oder niedermolekulare, mit Maleinsäureanhydrid funktionalisierte Polyolefine und Copolyolefine wirken nur verträglichkeitsvermittelnd. Ihr Vorteil ist, dass sie in Mengen kleiner 3 Gew.-% eingesetzt werden können.

Die Schlagzähigkeitsverbesserung der erfindungsgemässen Formmassen ist keine erfindungsgemässe Aufgabe, sie kann jedoch im Bedarfsfall durch Zusatz von für Polyamide üblichen Modifikatoren erzielt werden.

Blockcopolymere, wie z.B. solche mit einem Polystyrolhartblock und einem funktionalisierten Elastomerblock, oder gepfropfte Copolyolefine mit einem Pfropfgrad von 0.2-2 Mol-% Maleinsäureanhydrid und tiefen Glasumwandlungstemperaturen können zusätzlich zur eigentlichen verträglichkeitsvermittelnden Wirkung einen Anteil zur Schlagzähigkeitserhöhung erbringen.

Die vorteilhafte Kombination von Verträglichkeitsvermittlung und Schlagzähigkeitserhöhung ist oft auch mit Kern-Mantel-Polymeren möglich, die einen vernetzten Kern mit einer Glasübergangstemperatur kleiner -30 °C und einen polaren Mantel haben, wie z.B. aus Acrylsäure- und Methacrylsäureester bevorzugt aus Alkylacrylat oder Methylmethacrylat. Auch bevorzugt sind Kern-Mantel-Polymere, deren Mantel reaktive

Gruppen, insbesondere Carbonsäure-, Diacrylsäure-, Säureanhydrid- oder Epoxid-Gruppen tragen, wobei Maleinsäureanhydrid-Gruppen besonders bevorzugt sind.

Die Herstellung der erfingungsgemässen Formmassen erfolgt durch gemeinsames Aufschmelzen des semikristallinen und des amorphen Polyamids, vorteilhafterweise mit gleichzeitigem Zusatz des Verträglichkeitsvermittlers und unter intensiver Einwirkung von Scherkräften, die eine gute Durchmischung und Verteilung der Phasen gewährleisten. Der Verträglichkeitsvermittler stabilisiert dabei den Phasenaufbau für die folgenden thermoplastischen Verarbeitungsschritte. Es sind dies die Austragung der Schmelze als Strang, das Abkühlen und Zerkleinern oder das Formen von Teilen aus der Schmelze.

Die Zugabe des Verträglichkeitsvermittlers kann auch in einer Vorausextrusion je getrennt zur amorphen und/oder zur semikristallinen Polyamidkomponente erfolgen.

Der Mischvorgang wird kontinuierlich in einem oder mehreren Verfahrensschritten durchgeführt. Bevorzugt werden Doppelwellenkneter, z.B. sogenannte ZSK-Typen der Firma Werner und Pfleiderer, Stuttgart (D), oder der sogenannte Buss Cokneter der Firma Buss, Pratteln (CH), verwendet.

Charakteristisch für die erfindungsgemässen Formmassen ist, dass sich das semikristalline und das amorphe Polyamid nicht oder nur partiell mischen. Während das amorphe Polyamid glasartig erstarrt, bildet das semikristalline Polyamid beim Abkühlen aus der Schmelze seinen eigenen charakteristischen kristallinen und amorphen Polymeranteil aus. Der kristalline Anteil kann dabei, z.B. mit Nukleierungsmitteln so beeinflusst werden, dass er sich in feinkristalliner Form ausbildet.

Die erfindungsgemässen Formmassen können vielfältig modifiziert werden. So können sie z.B. mineralgefüllt, verstärkt und/oder flammverzögert, z.B. mittels Magnesiumhydroxid, eingestellt werden. Vorteilhafterweise werden bei der Herstellung der Formmassen, angepasst an die spätere Anwendung, auch Verarbeitungshilfsmittel und Stabilisatoren, welche z.B. den abbau durch Sauerstoff, Hitze und Strahlenbelastung verzögern, zugesetzt.

Die erfindungsgemässen Formmassen werden zur Herstellung von Formteilen verwendet. Hierbei ist die ausgezeichnete Ausgangsfarbe der erfindungsgemässen Formmassen von besonderem Vorteil. Sie erlaubt die sehr gute Einfärbbarkeit der Formmassen, z.B. durch Zugabe von Farbpigmenten oder löslichen organischen Farbstoffen direkt in die Schmelze während des Compoundiervorganges.

Formteile sind herstellbar, z.B. durch Spritzgiessen, Extrudieren, Koextrudieren oder Blasformen. Erfindungsgemässe Formmassen ohne Komponente c), d.h. ohne Verträglichkeitsvermittler, lassen sich bis zu einem amorphen Copolyamid-Anteil von 40 Gew.-Teilen herstellen, ohne dass Delaminierungserscheinungen auftreten. Solche Formmassen besitzen E-Modulwerte, welche mindestens genauso hoch sind wie die reinen Komponenten.

Erfindungsgemässe Formmassen, die den Verträglichkeitsvermittler in so kleinen Mengen enthalten, dass er nicht als Schlagzähmodifikator wirken kann, zeigen bereits Verbesserungen in der Kerbschlagzähigkeit. Sogar erfindungsgemässe Formmassen ohne Verträglichkeitsvermittler zeigen im konditionierten Zustand bessere Kerbschlagzähigkeit als die eingesetzten, reinen amorphen Copolyamide.

Weiterer Vorteil der erfindungsgemässen Formmassen ist ihre sehr gute Lösungsmittel- und Spannungsrissbeständigkeit. Ihr ganz besonderer Vorteil ist aber ihre hohe Steifigkeit, die gerade in feuchter Atmosphäre und Hitze nicht oder nicht wesentlich beeinträchtigt wird. So liegen die Werte für den Schubmodul, welcher ein Mass für die Steifigkeit ist, für die erfindungsgemässen Formmassen im konditionierten Zustand höher als die für vergleichbare Formmassen aus semikristallinem Polyamid und amorphen Copolyamid ohne dimerisierter Fettsäure als Monomerbaustein.

Die im folgenden beschriebenen Beispiele haben illustrativen Charakter und sind nicht als limitierend zu betrachten. Weiterhin dienen die Vergleichsbeispiele zur Abgrenzung der Erfindung.

Tabelle 1: Zusammenhang von thermoplastischen Formmassen.

| Beispiel | Semikristalline Komponente | Amorphes Copolyamid | Verträglichkeits-vermittler | Weitere Komponente |
|---|---|---|---|---|
| 1 | 40 Gew.-Teile PA 6 | 40 Gew.-Teile Nr. 1 | 20 Gew.-Teile Nr. 2 | -- |
| 2 | 40 Gew.-Teile PA 6.6 | 40 Gew.-Teile Nr. 1 | 20 Gew.-Teile Nr. 2 | -- |
| 3 | 30 Gew.-Teile PA 6 | 50 Gew.-Teile Nr. 2 | 20 Gew.-Teile Nr. 2 | -- |
| 4 | 30 Gew.-Teile PA 6 | 50 Gew.-Teile Nr. 3 | 20 Gew.-Teile Nr. 1 | -- |
| 5 | 30 Gew.-Teile PA 6 | 50 Gew.-Teile Nr. 3 | 20 Gew.-Teile Nr. 2 | -- |
| 6 | 40 Gew.-Teile PA 6 | 48 Gew.-Teile Nr. 1 | 12 Gew.-Teile Nr. 1 | -- |
| 7 | 40 Gew.-Teile PA 6 | 54 Gew.-Teile Nr. 1 | 6 Gew.-Teile Nr. 1 | -- |
| 8 | 40 Gew.-Teile PA 6 | 48 Gew.-Teile Nr. 1 | 12 Gew.-Teile Nr. 2 | -- |
| 9 | 60 Gew.-Teile PA 6 | 40 Gew.-Teile Nr. 1 | --------------- | -- |
| 10 | 60 Gew.-Teile PA 6.6 | 40 Gew.-Teile Nr. 1 | --------------- | -- |
| 11* | 20 Gew.-Teile PA 6 | 50 Gew.-Teile Nr. 4 | 15 Gew.-Teile Nr. 1 | 15 Gew.-T. Talkum |
| 12* | 50 Gew.-Teile PA 6.6 | 30 Gew.-Teile Nr. 5 | 12 Gew.-Teile Nr. 1<br>8 Gew.-Teile Nr. 2 | --<br>-- |
| 13* | 48 Gew.-Teile PA 6 | 32 Gew.-Teile Nr. 5 | 20 Gew.-Teile Nr. 1 | -- |

* Vergleichsbeispiele

## Beispiele

Die Komponenten der thermoplastischen Formmassen wurden in einem Taumelmischer vorgemischt. Bei Bedarf können noch Gleitmittel, Kristallisationsbeschleuniger und/oder Hitzestabilisatoren in Mengen

von 0,1 bis 3 Gew.-Teilen zugesetzt werden. Anschliessend wurde das Gemisch in die Einzugszone eines Zweiwellenextruders, Typ ZSK 30 (Firma Werner & Pfleiderer) dosiert und extrudiert. Die Produkte wurden als Strang abgezogen und granuliert. Aus den Granulaten wurden auf einer Spritzgussmaschine, Typ Arburg Allrounder 320-210-750, die verwendeten Probekörper hergestellt.

Tabelle 1 zeigt die Zusammensetzung der thermoplastischen Formmassen für die Beispiele 1-13, wobei die Beispiele 11 bis 13 Vergleichsbeispiele sind.

Tabelle 2

| Zusammensetzung der in den Beispielen 1-10 eingesetzten amorphen Copolyamide (Komponente b)). | | | |
|---|---|---|---|
| Nr. | Aromatische Dicarbonsäure | Dimerisierte Fettsäure | Cycloaliphatisches Diamin |
| 1 | 35 Mol-Teile Isophthalsäure | 15 Mol-Teile Nr. 1 | 50 Mol-Teile 3,3'-Dimethyl-4,4'-diaminodicyclohexylmethan |
| 2 | 44 Mol-Teile Isophthalsäure | 6 Mol-Teile Nr. 1 | 50 Mol-Teile 3,3'-Dimethyl-4,4'-diaminodicyclohexylmethan |
| 3 | 21 Mol-Teile Isophthalsäure<br>17 Mol-Teile Terephthalsäure | 12 Mol-Teile Nr. 2 | 50 Mol-Teile 1-Amino-3-aminomethyl--3',5,5'-trimethylcyclohexan |

Die amorphen Copolyamide werden dem Stand der Technik entsprechend in üblichen Autoklaven hergestellt. Die Zusammensetzung der in den Beispielen verwendeten amorphen Copolyamid ist Tabelle 2 zu entnehmen. Copolyamid Nr. 4 ist ein im Vergleichsbeispiel 11 verwendetes amorphes Copolyamid der Firma EMS-CHEMIE auf Basis von Hexamethylendiamin, Isophthal- und Terephthalsäure, das unter dem Handelsnamen "Grivory G 21" vertrieben wird.

Copolyamid Nr. 5 wird in den Vergleichsbeispielen 12 und 13 verwendet und ist ein amorphes Copolyamid der Firma EMS-CHEMIE auf Basis von Isophthalsäure, Terephthalsäure, Hexamethylendiamin und 3,3'-Dimethyl-4,4'-diaminodicyclohexylmethan (und enthält also ebenfalls keine dimerisierte Fettsäure) das unter dem Handelsmann "Grivory XE 3038" vertrieben wird.

Dimerisierte Fettsäuren (Komponente b) (ii))

Dimersäure Nr. 1

Gemisch aus dimerisierter Fettsäure mit 36 C-Atomen mit einem Gehalt an

| | |
|---|---|
| Monomer | < 0,1 Teile |
| Dimer | > 98 Teile |
| Trimer | < 1,0 Teile |
| sonstige | < 1,0 Teile |

Sie wird unter dem Handelsnamen "Pripol 1009" von der Firma Unichema vertrieben.

Dimersäure Nr. 2

Gemisch aus dimerisierter Fettsäure mit 36 C-Atomen mit einem Gehalt an

| | |
|---|---|
| Monomer | 4 Teile |
| Dimer | 91 Teile |
| Trimer | 5 Teile |

Sie wird unter dem Handelsnamen "Empol 1014" von der Firma Henkel-Emery vertrieben.

Semikristalline Polyamide (Komponente a))

Polyamid 6 : mittelviskoser Spritzgusstyp, $\eta_{rel}$ ca. 1,75
Polyamid 6.6 : mittelviskoser Spritzgusstyp, $\eta_{rel}$ ca. 1,8

Verträglichkeitsvermittler (Komponente c))

Verträglichkeitsvermittler Nr. 1:

Ein mit 0,6 Mol-% Maleinsäureanhydrid gepfropftes Ethylen-Propylen-Copolymeresmit einem Polypropylengehalt von 20 Mol-%.

Verträglichkeitsvermittler Nr. 2:

Ein Kern-Mantel-Polymeres mit einem Methylmethacrylat-Mantel und einem Kern aus mit Maleinsäureanhydrid gepfropften Butylacrylat.

In Tabelle 3 sind die charakteristischen Eigenschaften der Formmassen-Komponenten zusammengestellt.

In Tabelle 4 sind die charakteristischen Eigenschaften der erfindungsgemässen thermoplastischen Formmassen sowie die der Vergleichsbeispiele zusammengefasst.

In Tabelle 5 sind die mechanischen Eigenschaften der Komponenten und der erfindungsgemässen thermoplastischen Formmassen sowie die der Vergleichsbeispiele zusammengestellt.

Zu den charakteristischen Eigenschaften zählen die Glasübergangstemperatur Tg (gemessen am Anfang der Glasübergangsstufe als Tg onset), die relative Lösungsviskosität $\eta_{rel}$, die Schmelzviskosität und die Schmelztemperatur $T_S$. Die Glasübergangs- und Schmelztemperaturen wurden differentialkalorimetrisch (Differential Scanning Calorimetry) im trockenen Zustand bestimmt. Die DSC-Messungen wurden mit einer Aufheizrate von 20 °C/min an einem Du Pont Thermal Analyzer-Gerät Typ 1091 B durchgeführt. Die relative Lösungsviskosität wurde nach DIN 53727 als 0,5%ige Lösung in m-Kresol und die Schmelzviskosität nach DIN 53735 bei 270 °C und 122,6 N ermittelt.

Folgende mechanische Eigenschaften wurden bestimmt: Schlagzähigkeit $a_n$ und Kerbschlagzähigkeit $a_k$ nach Charpy (trocken und konditioniert) nach DIN 53453 bei 23 °C, Zug-E-Modul (trocken und konditioniert) nach DIN 53457 bei 23 °C, Torsionsschubmodul G (trocken und konditioniert) nach DIN 53445 bei 23 und 100 °C (Torsionsgerät: Nyrenne, Aufheizrate: 1 °C/min., Messfrequenz: 1Hz), Spannungsrisskorrosionsbeständigkeit in Ethanol nach DIN 53449 bei 23 °C.

Zur Konditionierung wurden die trockenen Materialien 7 Tage bei 70 °C und 62% relativer Luftfeuchtigkeit gelagert.

Wie die wenig oder unveränderten Werte für die Schmelz- und Glastemperaturen zeigen (siehe Tabelle 4), sind die erfindungsgemässen, thermoplastischen Formmassen mehrphasig. Dagegen zeigen die Formmassen der Vergleichsbeispiele nur einen Misch-Tg. Dies belegt, dass in den Vergleichsbeispielen die Formmassenkomponenten keine seperate Phasen ausbilden.

Die Rasterelektronenmikroskopaufnahmen von Figur 1 zeigen, dass durch die bessere Phasenhaftung aufgrund des Verträglichkeitsvermittlers feine Phasenmorphologien und daher gute mechanische Eigenschaften für die erfindungsgemässen Formmassen erreicht werden. So sind die Werte für den Torsionsschubmodul der erfindungsgemässen Formmassen bei 100 °C und bevorzugt im konditioniertem Zustand wesentlich besser als die Werte der reinen semikristallinen Komponente und der Formmassen aus den Vergleichsbeispielen.

Erfindungsgemässe Formmassen aus semikristallinem Polyamid und hohem Anteil an amorphem Copolyamid (>40 Gew.-Teilen) ohne Verträglichkeitsvermittler führen dagegen bei der Extrusion zu unregelmässigen Strängen und Delaminierungserscheinungen im Spritzgusskörper.

Für die Rasterelektronenmikroskopaufnabmen (REM) wurden die Proben wie folgt verarbeitet und dann an einem REM-Gerät der Firma Zeiss, Typ DSM 950 gemessen:
Die Probekörper wurden nach Eintauchen in flüssigen Stickstoff kalt gebrochen. Das amorphe Copolyamid wurde durch Behandeln der Bruchfläche mit 1,3-Dimethyl-2-imidazolidinon (DMI) und der Verträglichkeitsvermittler mit Toluol an der Bruchfläche herausgelöst.

In Figur 1 zeigt Photo 1 die unmodifizierte Bruchfläche eines Probenkörpers aus Beispiel 1. Photo 2 zeigt dessen mit DMI behandelte Bruchfläche, in der der Vermittler und das amorphe Copolyamid herausgelöst wurde. In Photo 3 wurde nur der Verträglichkeitvermittler mit Toluol an der Bruchfläche herausgelöst.

In Figur 2 zeigt Photo 4 die unmodifizierte Bruchfläche eines Probenkörpers aus Beispiel 2. Photo 5 zeigt die mit DMI behandelte Bruchfläche, in der das amorphe Copolyamid herausgelöst wurde und Photo 6 die mit Toluol behandelte Bruchfläche, in der wiederum nur der Verträglichkeitvermittler herausgelöst wurde.

In Figur 3 zeigt Photo 7 die mit DMI behandelte Bruchfläche eines Probenkörpers aus Beispiel 9, in der das amorphe Copolyamid herausgelöst wurde. Photo 8 zeigt die ebenfalls mit DMI behandelte Bruchfläche eines Probenkörpers aus Blend-Beispiel 10 an der auch das amorphe Copolyamid herausgelöst wurde.

Der Vergleich der Photos 2 und 3 mit Photo 7 sowie der Photos 5 und 6 mit Photo 8 zeigt, dass das amorphe Copolyamid in Formmassen mit und ohne Verträglichkeitsvermittler separat herausgelöst werden kann. Dies zeigt, dass amorphes Copolyamid und semikristallines Polyamid spearate Phasen bilden. Der separat herausgelöste Verträglichkeitsvermittler in den Photos 3 und 6 hinterlässt gegenüber den herausgelösten semikristallinen Polyamiden deutlich kleinere und einheitliche "Löcher". In den Photos 2 und 5 ist erkennbar, dass neben dem semikristallinen Polyamid ebenfalls der Verträglichkeitsvermittler gelöst wurde, da dort neben den grossen Löchern ebenfalls die typischen kleinen Löcher des Verträglichkeitvermittlers erkennbar sind. Die Löcher des Verträglichkeitsvermittlers sind auch in den Kanälen des herausgelösten amorphen Copolyamids erkennbar. Dies zeigt, dass der Verträglichkeitsvermittler anders als reine Schlagzähmodifikatoren auch an den Phasengrenzflächen angereichert ist und zwischen den unverträglichen Polyamiden Wechselwirkungen erzeugt.

Aus den Formmassen der Vergleichsbeispiele 11 bis 13 ist es dagegen nicht möglich, eine Polyamidkomponente separat herauszulösen. Dies zeigt, dass diese Formmassen einphasig sind und die einzelnen Komponenten nicht als separate Phasen vorliegen.

Tabelle 3: Charakteristische Eigenschaften von den Komponenten der erfindungsgemässen thermoplastischen Formmassen sowie der Vergleichsbeispiele.

| Komponente | $T_g$ [1] [°C] | $\eta$[2]rel | Schmelzviskosität [3] [Pa.s] | $T_s$ [4] [°C] |
|---|---|---|---|---|
| Polyamid 6 | 43 | 1,75 | 250 - 350 | 222 |
| Polyamid 6.6 | 48 | 1,8 | 200 - 400 | 261 |
| Copolyamid 1 | 155 | 1,4 - 1,45 | 2500 - 4500 | -- |
| Copolyamid 2 | 202 | 1,3 - 1,35 | 3000 - 5000 | -- |
| Copolyamid 3 | 155 | 1,3 - 1,35 | 500 - 700 | -- |
| Copolyamid 4* | 120 | 1,5 - 1,55 | 700 - 900 | -- |
| Copolyamid 5* | 140 | 1,4 - 1,45 | 700 - 900 | -- |
| Verträglichkeits-vermittler 1 | -80 | -- | -- | -- |
| Verträglichkeits-vermittler 2 | -40 | -- | -- | -- |

1 Glasübergangstemperatur (DSC)
2 Relative Viskosität nach DIN 53727 als 0,5%-ige Lösung in m-Kresol
3 Nach DIN 53735 bei 270°C und 122,6 N
4 Schmelztemperatur (DSC)
* Vergleichsbeispiele

Tabelle 4: Charakteristische Eigenschaften der erfindungsgemässen thermoplastischen Formmassen und der Vergleichsbeipiele.

| Formmasse | $T_g$[1] [°C] | $T_g$[2] [°C] | $T_s$[3] [°C] | Schmelzviskosität[4] [Pa.s] |
|---|---|---|---|---|
| Beispiel 1 | 33 | 158 | 218 | 10'221 |
| Beispiel 2 | n.m.[5] | 156 | 257 | 3'098 |
| Beispiel 3 | 37 | n.m. | 217 | 219 |
| Beispiel 4 | 46 | 153 | 222 | 1'820 |
| Beispiel 5 | 45 | 148 | 218 | 2'525 |
| Beispiel 6 | 48 | 153 | | 1'836 |
| Beispiel 7 | 48 | 154 | | 1'658 |
| Beispiel 8 | 47 | 155 | | 2'903 |
| Beispiel 9 | 43 | 159 | 222 | 599 |
| Beispiel 10 | n.m. | 158 | 261 | 578 |
| Beispiel 11* | --- 85[6] | --- | 206 | --- |
| Beispiel 12* | --- 63[6] | --- | 258 | 795 |
| Beispiel 13* | --- 65[6] | --- | 220 | 491 |

1 Glasübergangstemperatur der semikristallinen Blendkomponente (DSC)
2 Glasübergangstemperatur der amorphen Blendkomponente (DSC)
3 Schmelztemperatur (DSC)
4 nach DIN 53735 bei 270°C und 122,6 N
5 n.m. = nicht messbar
6 Misch-Tg.
* Vergleichsbeispiele

Tabelle 5: Mechanische Eigenschaften der Komponenten und der erfindungsgemässen thermoplastischen Formmassen (Beispiele 1 bis 10) und der Vergleichsbeispiele (Beispiele 11 bis 13).

| Komponente/ Formmasse | $E^1$(trocken) [N/mm²] | $E^1$(kondition.) [N/mm²] | $a_k^2$(trocken) [kJ/m²] | $a_k^2$(kondition.) [kJ/m²] | $a_n^3$(trocken) [kJ/m²] | $a_n^3$(kondition.) [kJ/m²] | $D^4$(23C) [MPa] (trocken) | $D^4$(23C) [MPa] (kond.) | $D^4$(100C) [MPa] (trocken) | $D^4$(100C) [MPa] (kond.) | Spannungsrisskorrosion[5] [s] |
|---|---|---|---|---|---|---|---|---|---|---|---|
| Polyamid 6 | 2800 | 900 | 5 | 15 | o.Br.[6] | o.Br. | 1012 | 405 | 162 | 151 | > 60 |
| Polyamid 6.6 | 3600 | 1700 | 5 | 10 | o.Br. | o.Br. | 1033 | 546 | 200 | 192 | > 60 |
| Copolyamid1 | 2200 | 1920 | 2,0-4,0 | 2,0-3,5 | o.Br. | o.Br. | | | | | < 10 |
| Copolyamid2 | 2260 | 2120 | 0,8-1,3 | 0,8-1,3 | 30-60 | 30-60 | | | | | < 10 |
| Copolyamid3 | 2400 | 2350 | 0,8-1,5 | 0,8-1,5 | o.Br. | o.Br. | | | | | < 10 |
| Copolyamid4 | 2900 | 2950 | 0,8-2 | 0,8-2 | o.Br. | o.Br. | | | | | |
| Copolyamid5 | 2970 | 3230 | 0,8-2 | 0,8-2 | o.Br. | o.Br. | | | | | |
| Beispiel 1 | 1977 | 1280 | 24 | 56 | o.Br. | o.Br. | | | | | > 60 |
| Beispiel 2 | 2000 | 1420 | 15 | 32 | o.Br. | o.Br. | | | | | > 60 |
| Beispiel 3 | 2120 | 1690 | 14 | 14 | o.Br. | o.Br. | 852 | 623 | 322 | 316 | > 60 |
| Beispiel 4 | 1660 | 1220 | 44 | 49 | o.Br. | o.Br. | 678 | 561 | 275 | 277 | > 60 |
| Beispiel 5 | 1980 | 1540 | 11 | 14 | o.Br. | o.Br. | 808 | 609 | 309 | 318 | > 60 |
| Beispiel 6 | 1980 | 1240 | 23 | o.Br. | o.Br. | o.Br. | 806 | 554 | 275 | 266 | > 60 |
| Beispiel 7 | 2250 | 1520 | 6 | 8 | o.Br. | o.Br. | 831 | 640 | 311 | 331 | > 60 |
| Beispiel 8 | 2270 | 1450 | 7 | 15 | o.Br. | o.Br. | 863 | 643 | 281 | 294 | > 60 |
| Beispiel 9 | 3030 | 1390 | 0,7 | 6,3 | o.Br. | o.Br. | | | | | > 60 |
| Beispiel 10 | 2620 | 1930 | 2,2 | 4,9 | o.Br. | o.Br. | | | | | > 60 |
| Beispiel 11* | 2850 | 2900 | 17 | 19 | o.Br. | o.Br. | 1145 | 1390 | 121 | 110 | > 60 |
| Beispiel 12* | 2130 | 2000 | 35 | | o.Br. | o.Br. | | 680 | | <50 | > 60 |
| Beispiel 13* | 1950 | 1900 | 39 | | o.Br. | o.Br. | | 800 | | <50 | > 60 |

1 Zug-E-Modul nach DIN 53457 bei 23°C
2 Kerbschlagzähigkeit nach Charpy nach DIN 53453 bei 23°C
3 Schlagzähigkeit nach Charpy nach DIN 53453 bei 23°C
4 Torsionsschubmodul nach DIN 53445
5 Spannungsrisskorrosionsbeständigkeit in Ethanol nach DIN 53449 bei 23°C
6 o.Br. = ohne Bruch
* Vergleichsbeispiele

## Patentansprüche

**1.** Thermoplastische Formmassen, dadurch gekennzeichnet, dass sie bestehen aus:
a) 25-75 Gew.-Teilen eines semikristallinen Polyamids

b) 75-25 Gew.-Teilen eines amorphen Copolyamids aus

(i) 25-45 Mol-Teilen mindestens einer aromatischen Dicarbonsäure

(ii) 25-5 Mol-Teilen dimerisierter Fettsäure

(iii) 50 Mol-Teilen mindestens eines cycloaliphatischen Diamins

wobei die Summe der Säuren (i) und (ii) und das Amin (iii) in äquimolaren Anteilen vorliegen

c) 0-30 Gew.-Teilen eines mit den Aminogruppen der Komponenten a) und b) reaktiven Polymeren als Verträglichkeitsvermittler, wobei sich die Anteile a), b) und c) auf 100 Gew.-Teile ergänzen

und gegebenenfalls zusätzlich

d) üblichen Zusatzstoffen als Füllstoffe, Flammschutzmittel, Verarbeitungshilfen oder Stabilisatoren.

2. Thermoplastische Formmassen gemäss Anspruch 1, dadurch gekennzeichnet, dass der Anteil der Komponente b) (i) 38-45 Mol-Teile und der der Komponente b) (ii) 5-12 Mol-Teile ist.

3. Thermoplastische Formmassen gemäss den Ansprüchen 1 oder 2, dadurch gekennzeichnet, dass der Anteil der Komponente c) 1-30 Gew.-Teile ist.

4. Thermoplastische Formmassen gemäss den Ansprüchen 1 bis 3, dadurch gekennzeichnet, dass der Anteil der Komponente c) kleiner 10 Gew.-Teile ist.

5. Thermoplastische Formmassen gemäss einem der vorangehenden Ansprüche, dadurch gekennzeichnet, dass sie zusätzlich 0-60 Gew.-Teile übliche Zusatzstoffe (d) aus der Gruppe der Verarbeitungshilfsmittel und Stabilisatoren, bevorzugt Schlagzähmodifikatoren, Flammschutzmittel, Füllstoffe und/oder Verstärkungsfasern, enthalten.

6. Thermoplastische Formmassen gemäss einem der vorangehenden Ansprüchen, dadurch gekennzeichnet, dass das semikristaline Polyamid ein semikristallines Homopolyamid aus ω-Aminocarbonsäuren oder Lactamen mit 6-9 C-Atomen oder aus aliphatischen Diaminen mit 4-12 C-Atomen und linearen Dicarbonsäuren mit 6-12 C-Atomen ist.

7. Thermoplastische Formmassen gemäss Anspruch 6, dadurch gekennzeichnet, dass das semikristalline Homopolyamid PA 6, PA 4.6, PA 6.6, PA 6.9, PA 6.10, oder PA 6.12 ist.

8. Thermoplastische Formmassen gemäss einem der vorangehenden Ansprüchen, dadurch gekennzeichnet, dass das semikristalline Polyamid ein semikristallines Copolyamid mit einem Schmelzpunkt (gemessen mittels DSC als Maximum der Schmelzbande) von mindestens 170°C ist, bevorzugt ein Copolyamid auf Basis der Monomeren von PA 4.6, PA 6.6, PA 6.8, PA 6.9, PA 6.10, PA 6.12, PA 12.6 und PA 6.

9. Thermoplastische Formmassen gemäss einem der vorangehenden Ansprüchen, dadurch gekennzeichnet, dass die aromatische Dicarbonsäure eine ein- oder mehrkernige Dicarbonsäure oder ein Gemisch dieser Säuren ist.

10. Thermoplastische Formmassen gemäss Anspruch 9, dadurch gekennzeichnet, dass die ein- oder mehrkernige Dicarbonsäure Isophthalsäure, Terephtalsäure, 5-tertbutyl-Isophthalsäure, Naphthalindicarbonsäure,

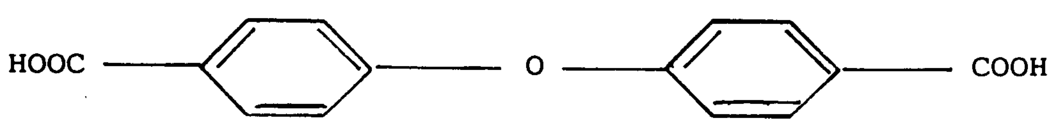

oder

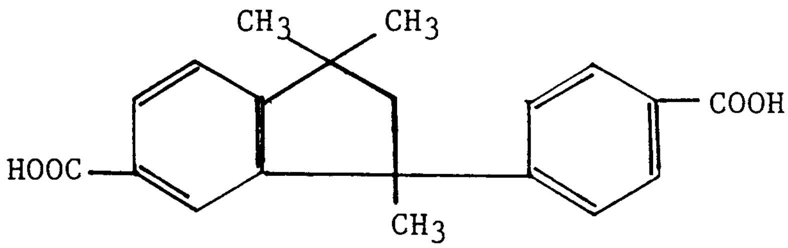

oder ein Gemisch dieser Säuren ist.

11. Thermoplastische Formmassen gemäss einem der vorangehenden Ansprüchen, dadurch gekennzeichnet, dass die dimerisierte Fettsäure eine langkettige Fettsäure mit 36-45 C-Atomen ist.

12. Thermoplastische Formmassen gemäss Anspruch 11, dadurch gekennzeichnet, dass die dimerisierte Fettsäure eine Fettsäure mit einem Dimeranteil von mindestens 90 Gew.-%, bevorzugt von mindestens 97 Gew.-%, ist.

13. Thermoplastische Formmassen gemäss einem der vorangehenden Ansprüchen, dadurch gekennzeichnet, dass das cycloaliphatische Diamin ein mehrkerniges Diamin der Formel I oder ein beliebiges einkerniges Diamin oder ein Gemisch dieser Diamine ist,

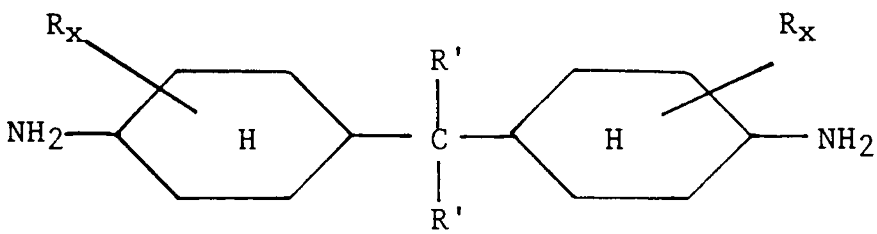 I

wobei R für einen Alkylrest mit 1-10 C-Atomen steht, R' Wasserstoff oder einen Alkylrest mit 1-6 C-Atomen bedeutet und x 0 bis 4 ist.

14. Thermoplastische Formmassen gemäss Anspruch 13, dadurch gekennzeichnet, dass das mehrkernige cycloaliphatische Diamin ein Amin der Formel II, III, IV oder ein Gemisch dieser Diamine, ist.

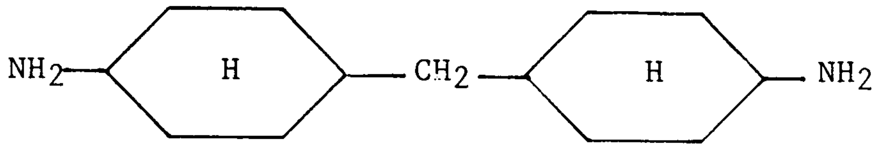

II

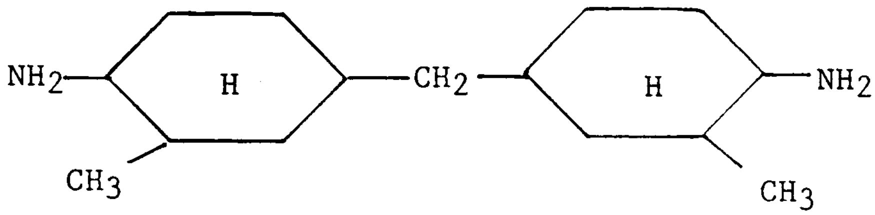

III

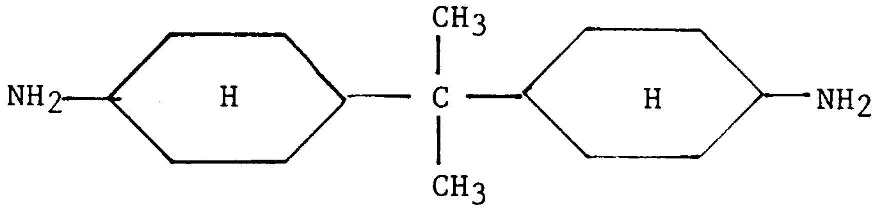

IV

**15.** Thermoplastische Formmassen gemäss Anspruch 13, dadurch gekennzeichnet, dass das einkernige cycloaliphatische Diamin 1-Amino-3-aminomethyl-3,5, 5-trimethylcyclohexan, 1,3-Diaminocyclohexan, 1,4-Diaminomethylcyclohexan oder ein Gemisch dieser Diamine ist.

**16.** Thermoplastische Formmassen gemäss einem der vorangehenden Ansprüchen, dadurch gekennzeichnet, dass der Verträglichkeitsvermittler eine oligomere und/oder polymere schmelzbare Verbindung ist, die zu den Endgruppen der Polyamide reaktive Gruppen besitzt, die bevorzugt Säureanhydrid-, Carbonsäure-, Diacrylsäure-, Epoxid-, Amino- oder mit Metallsalz neutralisierte Carbonsäure-Gruppen sind.

**17.** Thermoplastische Formmassen gemäss Anspruch 16, dadurch gekennzeichnet, dass der Verträglichkeitsvermittler ein gepfropftes Copolyolefin mit einem Propfgrad von 0,2 - 2 Mol-% Maleinsäureanhydrid ist.

**18.** Thermoplastische Frommassen gemäss Anspruch 16, dadurch gekennzeichnet, dass der Verträglichkeitsvermittler ein oligomeres Polyolefin oder Copolyolefin mit einem niedrigen Glasumwandlungspunkt ist, bevorzugt ein Styrol-Maleinsäureanhydrid-Oligomeres mit 4-10 Säureanhydridgruppen.

**19.** Thermoplastische Formmassen gemäss Anspruch 16, dadurch gekennzeichnet, dass der Verträglichkeitsvermittler ein Kern-Mantel-Polymeres aus einem vernetzten Kern mit einer Glasübergangstemperatur kleiner -30 °C und einem Mantel aus polaren Bausteinen ist.

**20.** Thermoplastische Formmassen gemäss Anspruch 19, dadurch gekennzeichnet, dass der Mantel des Kern-Mantel-Polymeren zu Polyamid reaktive Gruppen, bevorzugt Acrylsäure- und Methacrylsäureester, Maleinsäureanydrid-, Diacrylsäure-, Carbonsäure- und/oder Epoxid-Gruppen besitzt.

**21.** Verfahren zur Herstellung von thermoplastischen Formmassen gemäss einem der vorangehenden Ansprüchen, dadurch gekennzeichnet, dass die Komponenten der Formmassen in der Schmelze unter Einwirkung von Scherkräften intensiv miteinander gemischt werden, dann die Schmelze, vorzugsweise als Strang, ausgetragen, abgekühlt und zerkleinert oder geformt wird.

**22.** Verfahren gemäss Anspruch 21, dadurch gekennzeichnet, dass der Mischvorgang kontinuierlich durchgeführt wird, bevorzugt in einem Extruder, wobei der Mischvorgang in einem oder mehreren Verfahrensschritten abläuft.

**23.** Verwendung von thermoplastischen Formmassen gemäss den Ansprüchen 1 bis 20 zur Herstellung von Formteilen.

**24.** Formteile herstellbar aus thermoplastischen Frommassen gemäss den Ansprüchen 1 bis 20.

**Claims**

**1.** Thermoplastic moulding materials characterised in that they comprise:
a) 25-75 parts by weight of a semicrystalline polyamide
b) 75-25 parts by weight of an amorphous copolyamide derived from
(i) 25-45 mol parts of at least one aromatic dicarboxylic acid
(ii) 25-5 mol parts dimerised fatty acid
(iii) 50 mol parts of at least one cycloaliphatic diamine
wherein the sum of acids (i) and (ii) and the amine (iii) are in equal molar amounts
c) 0-30 parts by weight of, as a compatibility agent, a polymer reactive with the amino groups of components a) and b), wherein the proportions of a), b) and c) are in sum 100 parts by weight
and optionally in addition
d) fillers, flame-retardants, processing aids or stabilisers as conventional additives.

**2.** Thermoplastic moulding materials according to claim 1, characterised in that the proportion of component b)(i) is 38-45 mol parts and of component b)(ii) 5-12 mol parts.

**3.** Thermoplastic moulding materials according to claims 1 or 2, characterised in that the proportion of component c) is 1-30 parts by weight.

**4.** Thermoplastic moulding materials according to claims 1 to 3, characterised in that the proportion of component c) is less than 10 parts by weight.

**5.** Thermoplastic moulding materials according to one of the preceding claims, characterised in that it additionally contains 0-60 parts by weight of conventional additives (d) selected from the group of processing aids and stabilisers, preferably impact modifiers, flame-proofing agents, fillers and/or reinforcing fibres.

**6.** Thermoplastic moulding materials according to one of the preceding claims, characterised in that the semicrystalline polyamide is a semicrystalline homopolyamide of ω-aminocarboxylic acids or lactams having 6-9 C atoms or of aliphatic diamines having 4-12 C atoms and linear dicarboxylic acids having 6-12 C atoms.

**7.** Thermoplastic moulding materials according to claim 6, characterised in that the semicrystalline homopolyamide is PA 6, PA 4.6, PA 6.6, PA 6.9, PA 6.10 or PA 6.12.

**8.** Thermoplastic moulding materials according to one of the preceding claims, characterised in that the semicrystalline polyamide is a semicrystalline copolyamide having a melting point of at least 170 °C (measured by DSC as the maximum of the melting band), preferably a copolyamide on the basis of monomers of PA 4.6, PA 6.6, PA 6.8, PA 6.9, PA 6.10, PA 6.12, PA 12.6 and PA 6.

**9.** Thermoplastic moulding materials according to one of the preceding claims, characterised in that the aromatic dicarboxylic acid is a mono- or poly-cyclic dicarboxylic acid or a mixture of such acids.

**10.** Thermoplastic moulding materials according to claim 9, characterised in that the mono- or polycyclic dicarboxylic acid is isophthalic acid, terephthalic acid, 5-tert-butyl-isophthalic acid, naphthalenedicarboxylic acid,

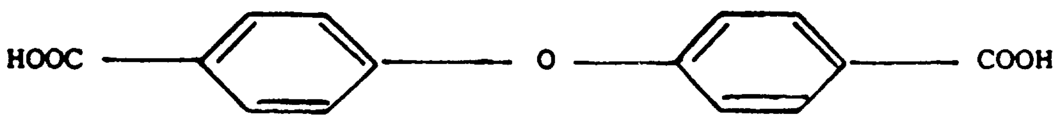

or

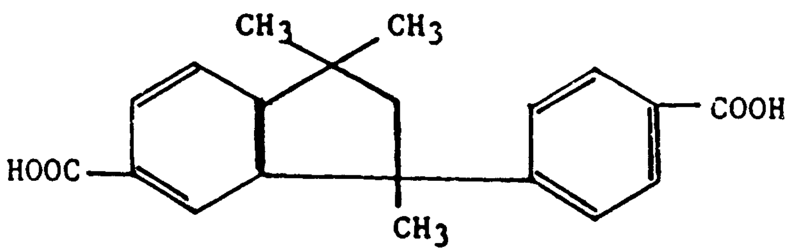

or a mixture of these acids.

**11.** Thermoplastic moulding materials according to one of the preceding claims, characterised in that the dimerised fatty acid is a long-chain fatty acid having 36-45 C atoms.

**12.** Thermoplastic moulding materials according to claim 11, characterised in that the dimerised fatty acid is a fatty acid with a dimer content of at least 90% by weight, preferably of at least 97% by weight.

**13.** Thermoplastic moulding materials according to one of the preceding claims, characterised in that the cycloaliphatic diamine is a polycyclic diamine of formula I

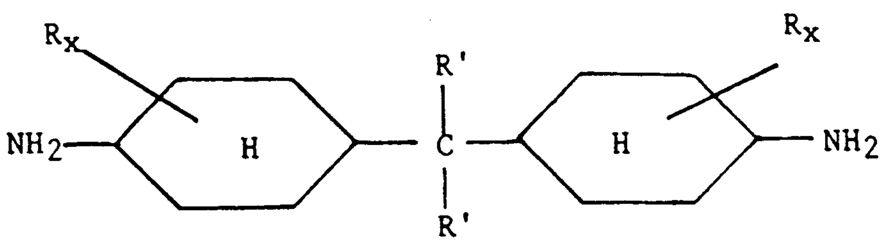 I

or any monocyclic diamine or a mixture of these diamines, wherein R is an alkyl group having 1-10 C atoms, R' is hydrogen or an alkyl group having 1-6 C atoms and x is 0 to 4.

**14.** Thermoplastic moulding materials according to claim 13, characterised in that the polycyclic cycloaliphatic diamine is an amine of formula II, III, IV

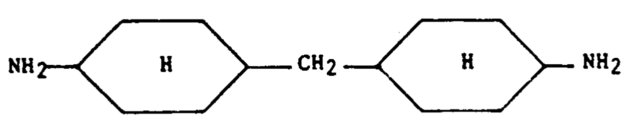 II

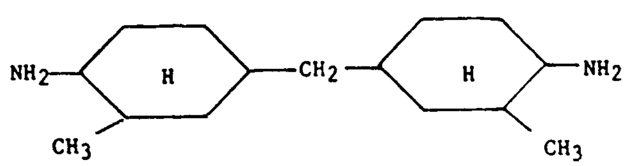 III

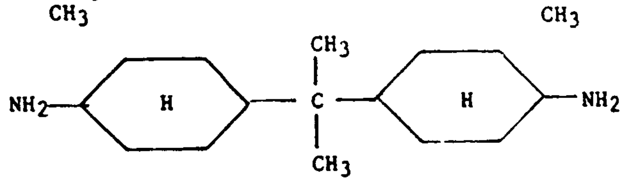 IV

or a mixture of these diamines.

**15.** Thermoplastic moulding materials according to claim 13, characterised in that the monocyclic cycloaliphatic diamine is 1-amino-3-aminomethyl-3,5,5-trimethylcyclohexane, 1,3-diaminocyclohexane, 1,4-diaminomethylcyclohexane or a mixture of these amines.

**16.** Thermoplastic moulding materials according to one of the preceding claims, characterised in that the compatibility agent is an oligomeric and/or polymeric meltable compound having groups reactive with the polyamide terminal groups, preferably acid anhydride, carboxylic acid, diacrylic acid, epoxide, amino or metal salt-neutralised carboxylic acid groups.

**17.** Thermoplastic moulding materials according to claim 16, characterised in that the compatibility agent is a grafted copolyolefin having a degree of grafting of 0.2-2 mol% maleic acid anhydride.

**18.** Thermoplastic moulding materials according to claim 16, characterised in that the compatibility agent is an oligomeric polyolefin or copolyolefin having a low glass transition temperature, preferably a styrene-maleic acid anhydride oligomer having 4-10 acid anhydride groups.

**19.** Thermoplastic moulding materials according to claim 16, characterised in that the compatibility agent is a core-sheath polymer having a cross-linked core with a glass transition temperature below -30 °C and a sheath of polar components.

**20.** Thermoplastic moulding materials according to claim 19, characterised in that the sheath of the core-sheath polymer comprises polyamide-reactive groups, preferably acrylic acid and methacrylic acid ester, maleic acid anhydride, diacrylic acid, carboxylic acid and/or epoxide groups.

**21.** Process for the preparation of thermoplastic moulding materials according to one of the preceding claims, characterised in that the components of the moulding material are intensively mixed with one another in the melt under the influence of shear forces, and the melt is then discharged, preferably as a strand, cooled and comminuted or shaped.

**22.** Process according to claim 21, characterised in that the mixing process is conducted continuously, preferably in an extruder, whereby the mixing process is conducted in one or more process steps.

**23.** Use of thermoplastic moulding materials according to claims 1 to 20 for the preparation of moulded articles.

**24.** Moulded articles obtainable from thermoplastic moulding materials according to claims 1 to 20.

## Revendications

**1.** Masses à mouler thermoplastiques, caractérisées en ce qu'elles sont constituées de

a) 25 à 75 parties en poids d'un polyamide semi-cristallin,

b) 75 à 25 parties en poids d'un copolyamide amorphe, composé de

i) 25 à 45 parties en moles d'au moins un acide aromatique dicarboxylique,

ii) 25 à 5 parties en moles d'un acide gras dimérisé,

iii) 50 parties en moles d'au moins une diamine cycloaliphatique,

le total des acides (i) et (ii) et l'amine (iii) se trouvant en proportions équimolaires,

c) 0 à 30 parties en poids d'un polymère, utilisé comme agent de compatibilisation, qui peut réagir avec les groupes amino des composants (a) et (b),

les composants (a), (b) et (c) faisant en tout 100 parties en poids, et en outre, éventuellement,

d) des adjuvants habituellement employés en tant que charges, agents ignifugeants, auxiliaires de traitement ou stabilisants.

**2.** Masses à mouler thermoplastiques conformes à la revendication 1, caractérisées en ce que la quantité de composant (b-i) représente de 38 à 45 parties en moles et la quantité de composant (b-ii) représente de 5 à 12 parties en moles.

**3.** Masses à mouler thermoplastiques conformes à la revendication 1 ou 2, caractérisées en ce que la quantité de composant (c) représente de 1 à 30 parties en poids.

**4.** Masses à mouler thermoplastiques conformes à l'une des revendications 1 à 3, caractérisées en ce que la quantité de composant (c) représente moins de 10 parties en poids.

**5.** Masses à mouler thermoplastiques, conformes à l'une des revendications précédentes, caractérisées en ce qu'elles contiennent en outre de 0 à 60 parties en poids d'adjuvants habituels (d) choisis dans l'ensemble que constituent les auxiliaires de traitement, les stabilisants, de préférence les agent de modification de la résistance aux chocs, les agents ignifugeants, les charges et/ou les fibres de renfort.

**6.** Masses à mouler thermoplastiques, conformes à l'une des revendications précédentes, caractérisées en ce que le polyamide semi-cristallin est un homopolyamide semi-cristallin formé à partir d'acides ω-aminocarboxyliques ou de lactames comportant de 6 à 9 atomes de carbone, ou à partir de diamines aliphatiques comportant de 4 à 12 atomes de carbone et d'acides dicarboxyliques linéaires comportant de 6 à 12 atomes de carbone.

**7.** Masses à mouler thermoplastiques conformes à la revendication 6, caractérisées en ce que l'homopolyamide semi-cristallin est un PA 6, un PA 4-6, un PA 6-6, un PA 6-9, un PA 6-10 ou un PA 6-12.

**8.** Masses à mouler thermoplastiques, conformes à l'une des revendications précédentes, caractérisées en ce le polyamide semi-cristallin est un copolyamide semi-cristallin dont le point de fusion (mesuré par analyse enthalpique différentielle, au sommet de la bande de fusion) vaut au moins 170 °C et qui est de préférence un copolyamide formé à partir de monomères des PA 4-6, PA 6-6, PA 6-8, PA 6-9, PA 6-10, PA 6-12, PA 12-6 et PA 6.

**9.** Masses à mouler thermoplastiques, conformes à l'une des revendications précédentes, caractérisées en ce que l'acide aromatique dicarboxylique est un acide dicarboxylique monocyclique ou polycyclique, ou un mélange de tels acides.

**10.** Masses à mouler thermoplastiques conformes à la revendication 9, caractérisées en ce que l'acide dicarboxylique monocyclique ou polycyclique est de l'acide isophtalique, de l'acide téréphtalique, de l'acide 5-t-butyl-isophtalique, un acide naphtalène-dicarboxylique, de l'acide de formule

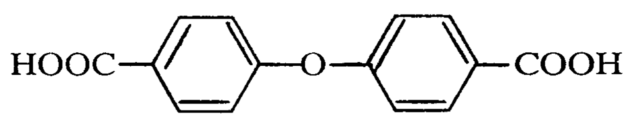

ou

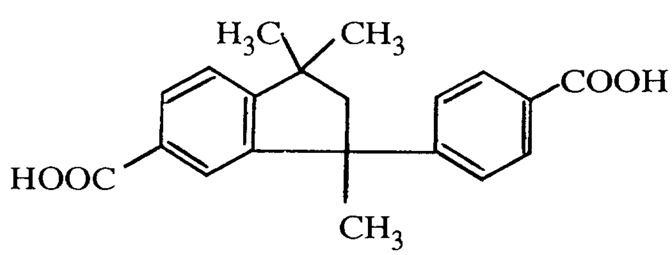

ou un mélange de ces acides.

**11.** Masses à mouler thermoplastiques, conformes à l'une des revendications précédentes, caractérisées en ce que l'acide gras dimérisé est un acide gras à longue chaîne comportant de 36 à 45 atomes de carbone.

**12.** Masses à mouler thermoplastiques conformes à la revendication 11, caractérisées en ce que l'acide gras dimérisé est un acide gras dont la fraction de dimères vaut au moins 90% en poids, et de préférence, au moins 97% en poids.

**13.** Masses à mouler thermoplastiques, conformes à l'une des revendications précédentes, caractérisées en ce que la diamine cycloaliphatique est une diamine polycyclique de formule (I) :

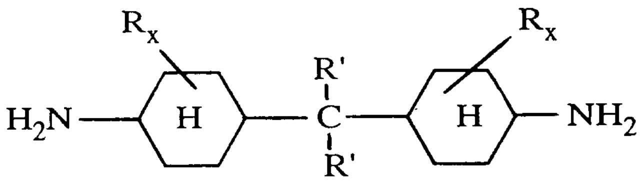

(I)

dans laquelle R représente un groupe alkyle comportant de 1 à 10 atomes de carbone, R' représente un atome d'hydrogène ou un groupe alkyle comportant de 1 à 6 atomes de carbone, et x vaut de 0 à 4, ou une diamine monocyclique quelconque, ou un mélange de telles diamines.

**14.** Masses à mouler thermoplastiques conformes à la revendication 13, caractérisées en ce que la diamine cycloaliphatique polycyclique est une amine de formule (II), (III) ou (IV) :

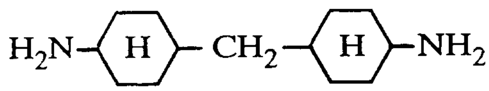

(II)

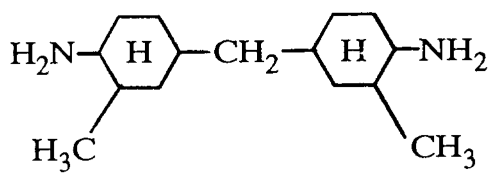

(III)

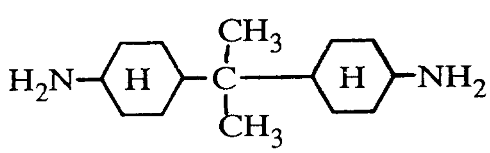

(IV)

ou un mélange de ces diamines.

**15.** Masses à mouler thermoplastiques conformes à la revendication 13, caractérisées en ce que la diamine cycloaliphatique monocyclique est du 1-amino-3-aminométhyl-3,5,5-triméthylcyclohexane, du 1,3-diaminométhylcyclohexane ou du 1,4-diaminométhylcyclohexane, ou un mélange de ces diamines.

**16.** Masses à mouler thermoplastiques, conformes à l'une des revendications précédentes, caractérisées en ce que l'agent de compatibilisation est un composé oligomère et/ou polymère fusible qui comporte des groupes qui peuvent réagir avec les groupes terminaux des polyamides et qui sont de préférence des groupes de type anhydride d'acide, acide carboxylique, acide diacrylique, époxyde, amino ou acide carboxylique neutralisé sous forme de sel métallique.

**17.** Masses à mouler thermoplastiques conformes à la revendication 16, caractérisées en ce que l'agent de compatibilisation est un copolymère d'oléfine, obtenu par greffage de 0,2 à 2 % en moles d'anhydride maléique.

**18.** Masses à mouler thermoplastiques conformes à la revendication 16, caractérisées en ce que l'agent de compatibilisation est une polyoléfine ou copolyoléfine oligomère présentant une basse température de transition vitreuse, et de préférence, un oligomère de styrène et d'anhydride maléique comportant de 4 à 10 groupes de type anhydride d'acide.

**19.** Masses à mouler thermoplastiques conformes à la revendication 16, caractérisées en ce que l'agent de compatibilisation est un polymère de type noyau-coque, constitué d'un noyau réticulé dont la température de transition vitreuse est inférieure à -30 °C et d'une coque à motifs polaires.

**20.** Masses à mouler thermoplastiques conformes à la revendication 19, caractérisées en ce que la coque du polymère de type noyau-coque comporte des groupes qui peuvent réagir avec les polyamides, de préférence des groupes de type ester acrylique ou méthacrylique, anhydride maléique, acide diacrylique, acide carboxylique et époxyde.

**21.** Procédé de préparation de masses à mouler thermoplastiques conformes à l'une des revendications précédentes, caractérisé en ce que l'on mélange bien les uns avec les autres les composants des masses à mouler, à l'état fondu, sous l'action de forces de cisaillement, puis on décharge la masse fondue, avantageusement sous la forme d'un boudin, on la fait refroidir, et on la fragmente ou on la moule.

**22.** Procédé conforme à la revendication 21, caractérisé en ce que l'on réalise en continu le processus de mélange, de préférence dans une extrudeuse, ce processus de mélange se déroulant en une ou plusieurs étapes de procédé.

**23.** Utilisation de masses à mouler thermoplastiques conformes à l'une des revendications 1 à 20, pour la fabrication de pièces moulées.

**24.** Pièces moulées fabriquées à partir de masses à mouler thermoplastiques conformes à l'une des revendications 1 à 20.

FIGUR 1

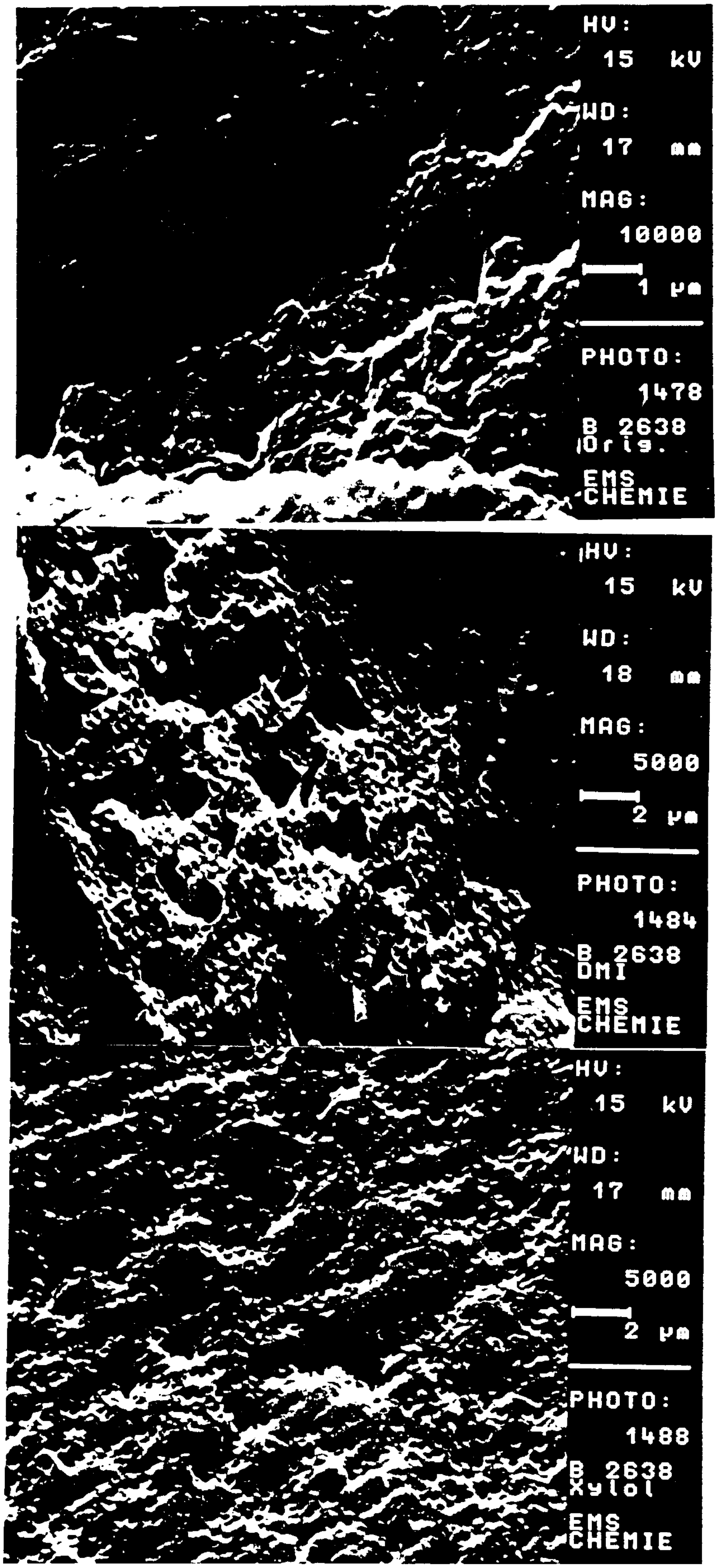
HV:
15 kV
WD:
17 mm
MAG:
10000
1 μm
PHOTO:
1478
B 2638
Orig.
EMS
CHEMIE
HV:
15 kV
WD:
18 mm
MAG:
5000
2 μm
PHOTO:
1484
B 2638
DMI
EMS
CHEMIE
HV:
15 kV
WD:
17 mm
MAG:
5000
2 μm
PHOTO:
1488
B 2638
Xylol
EMS
CHEMIE

1

2

3

FIGUR 2

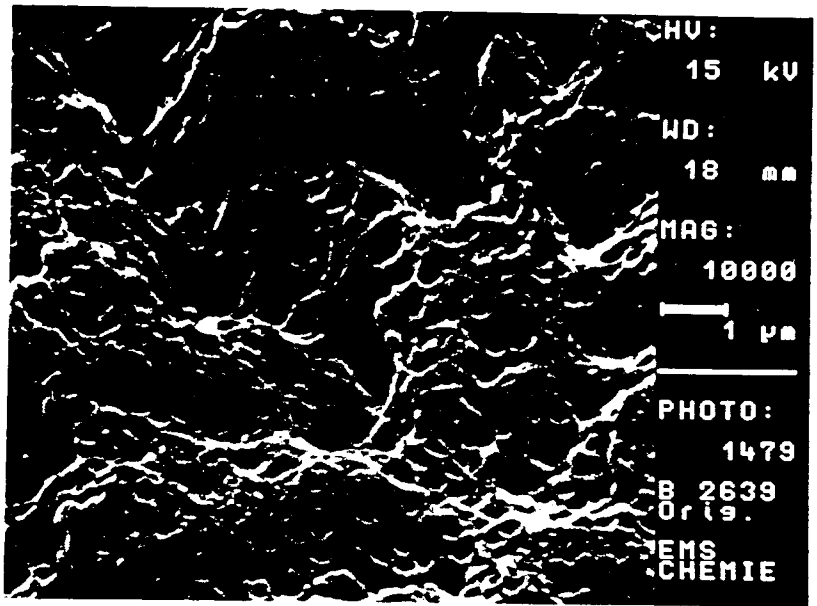
HV:
15 kV
WD:
18 mm
MAG:
10000
1 µm
PHOTO:
1479
B 2639
Orig.
EMS
CHEMIE

4

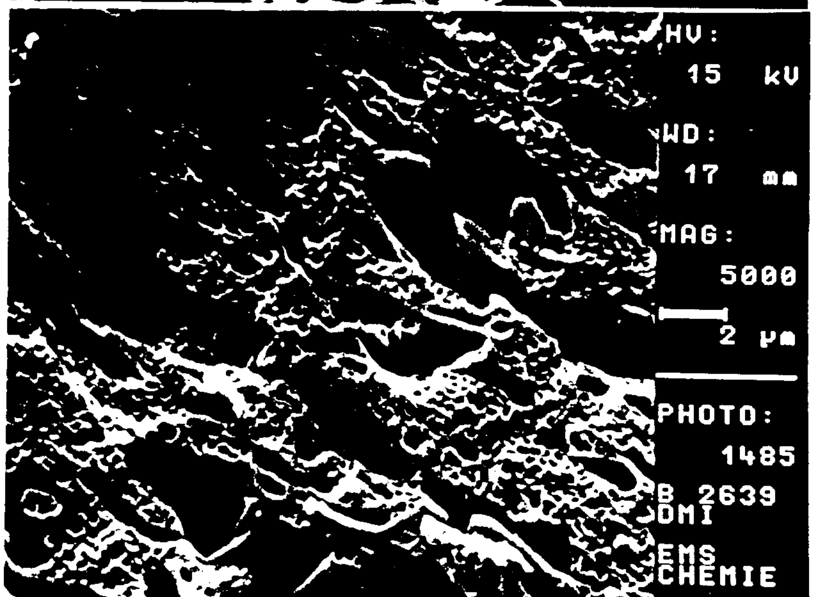
HV:
15 kV
WD:
17 mm
MAG:
5000
2 µm
PHOTO:
1485
B 2639
DMI
EMS
CHEMIE

5

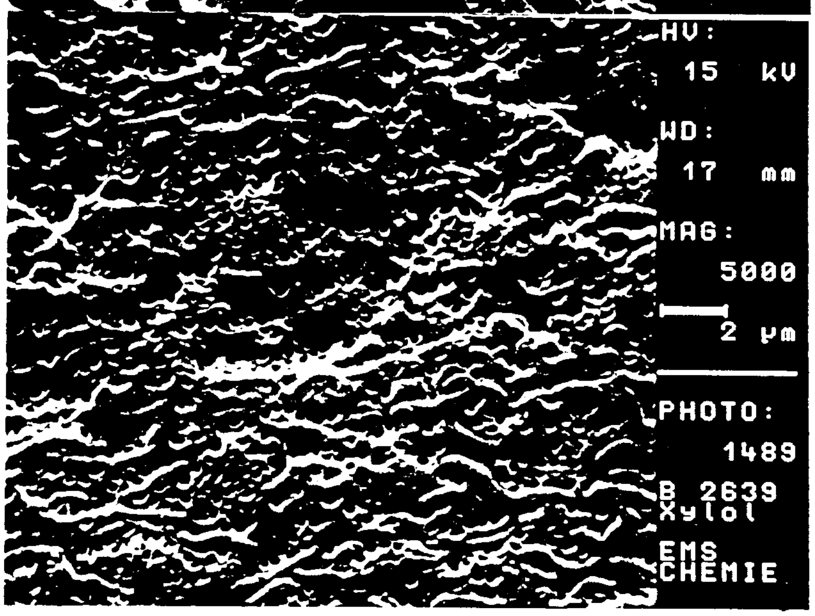
HV:
15 kV
WD:
17 mm
MAG:
5000
2 µm
PHOTO:
1489
B 2639
Xylol
EMS
CHEMIE

6

FIGUR 3

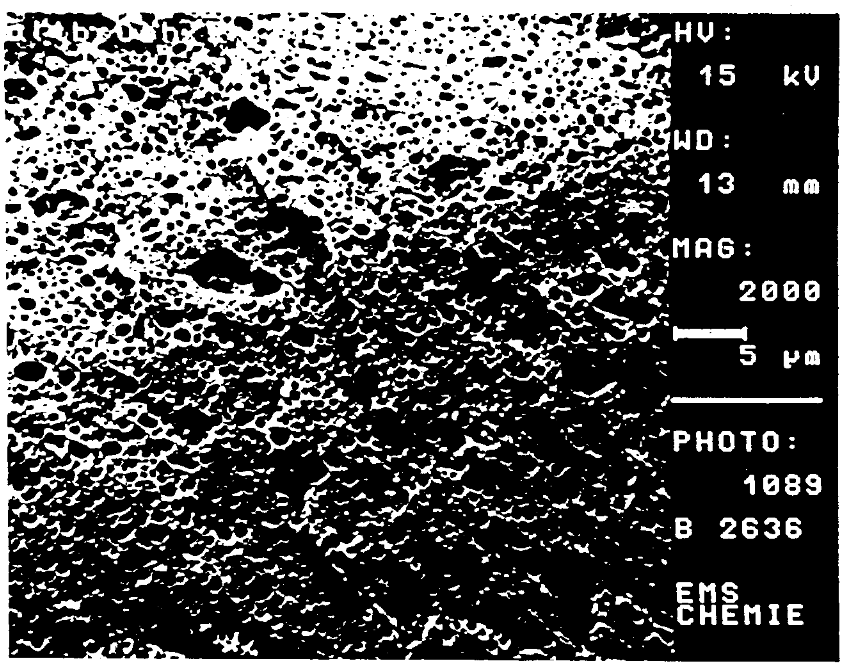


7

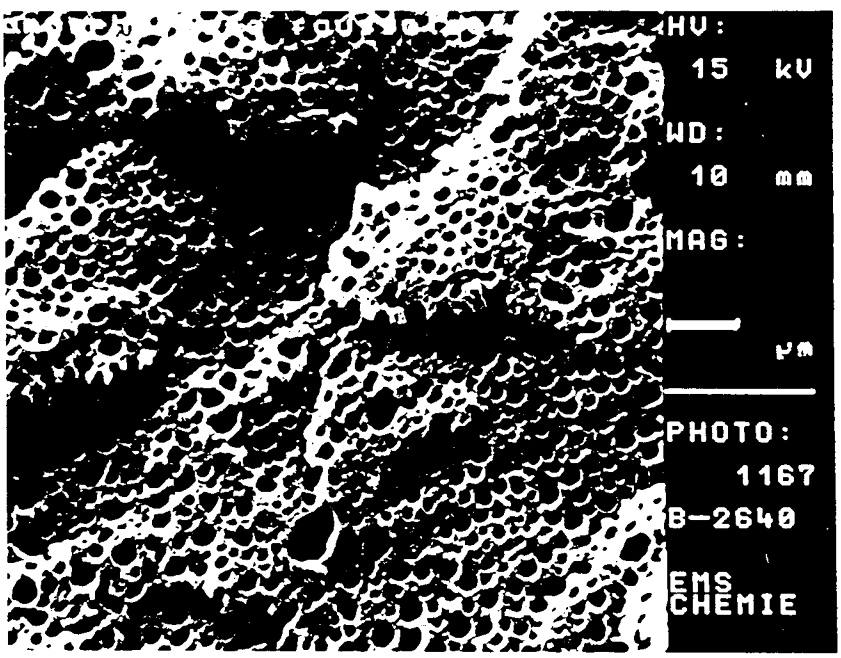


2000

8µm

8